# EUROPÄISCHE PATENTSCHRIFT

(11) **EP 2 797 784 B1**
(45) Veröffentlichungstag und Bekanntmachung des Hinweises auf die Patenterteilung: **23.09.2020**
(21) Anmeldenummer: 12787456.8
(22) Anmeldetag: 20.11.2012
(51) Int. Cl.: B60S 1/38

(54) **WISCHBLATTADAPTEREINHEIT**
WIPER BLADE ADAPTER UNIT
UNITÉ D'ADAPTATEUR D'ESSUIE-GLACE

(30) Priorität: 29.12.2011 DE 102011090099
(43) Veröffentlichungstag der Anmeldung: 05.11.2014
(73) Patentinhaber: Robert Bosch GmbH, 70442 Stuttgart (DE)
(72) Erfinder: BONROY, Jan, 3001 Heverlee (BE); JANS, Geert, 3630 Maasmechelen (BE); VERELST, Hubert, 3300 Tienen (BE); DE ROP, Dominik, 4280 Lens-Saint-Remy (BE); VAN HOYE, Jan, 3980 Tessenderlo (BE); SPRAFKE, Peter, 201206 Shanghai (CN)
(86) Internationale Anmeldenummer: PCT/EP2012/073019
(87) Internationale Veröffentlichungsnummer: WO 2013/097982

(56) Entgegenhaltungen:
- WO-A1-2011/098372
- DE-A1-102007 012 700
- DE-A1-102010 003 645
- DE-A1-102010 028 102

## Beschreibung

### Stand der Technik

Es ist bereits eine Wischblattadaptereinheit mit einem Wischblattadapter, der für eine Verbindung mit einem Wischarmadapter vorgesehen ist und einen Aufnahmebereich aufweist, über den ein gekrümmtes Trägerelement eines Wischblatts fest angebracht ist, vorgeschlagen worden (siehe z.B. Dokument WO 2011/098372 A1).

### Offenbarung der Erfindung

Die Erfindung geht aus von einer Wischblattadaptereinheit mit einem Wischblattadapter, der zu einer Verbindung mit einem Wischarmadapter vorgesehen ist und zumindest einen Aufnahmebereich aufweist, der zumindest eine Anlagefläche aufweist, die zur Befestigung zumindest eines Trägerelements eines Wischblatts vorgesehen ist.

Es wird vorgeschlagen, dass die zumindest eine Anlagefläche eine Länge von maximal 20 mm aufweist. Dadurch kann das gekrümmte Trägerelement besonders vorteilhaft und mit nur einer minimalen Verstimmung mit dem Wischblattadapter fest verbunden werden. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an einem Wischarm befestigbar oder besonders bevorzugt mit diesem einstückig ausgebildet. Unter einem "Wischblattadapter" soll in diesem Zusammenhang insbesondere ein Adapter verstanden werden, der einen Kontaktbereich zu einem Wischblattbauteil aufweist und mit dem Wischblatt, in einem demontierten Zustand eines Wischblatts von einem Wischarm, zumindest in einem Betriebszustand unverlierbar verbunden und dazu vorgesehen ist, einen Kopplungsbereich des Wischblatts für eine Kopplung und/oder Kontaktierung mit einem Wischarmadapter bereitzustellen. Unter "vorgesehen" soll insbesondere speziell ausgelegt und/oder ausgestattet verstanden werden. Unter einem "Aufnahmebereich" soll insbesondere ein Bereich verstanden werden, in dem ein Trägerelement an dem Wischblattadapter angebracht ist. Unter einem "Trägerelement" soll insbesondere eine Federschiene verstanden werden, die eine Wischkraft von dem Wischarm auf die gesamte Wischleiste überträgt und durch seine Krümmung, die größer ist als eine maximale Krümmung einer zu wischenden Kraftfahrzeugscheibe, die Wischleiste über ihre gesamte Länge auf die Kraftfahrzeugscheibe drückt und so ein Abheben der Wischleiste von der Kraftfahrzeugscheibe verhindert. Vorzugsweise ist das Trägerelement zumindest teilweise aus einem Federstahlblech gebildet. Besonders bevorzugt weist das Trägerelement zumindest eine Außenschicht aus einem Kunststoff auf. Unter einer "Befestigung" soll dabei insbesondere eine feste und verliersichere Verbindung verstanden werden, die mittels einer geeigneten Verbindungsart hergestellt wird. Dabei soll unter einer "geeigneten Verbindungsart" insbesondere eine Art der Verbindung zweier Bauteile, insbesondere des Wischblattadapters und des gekrümmten Trägerelements, verstanden werden. Dabei ist die Art der Verbindung vorzugsweise als eine Schweißverbindung ausgebildet, wobei grundsätzlich auch andere Verbindungsarten, wie beispielsweise eine Klebeverbindung, eine Formschlussverbindung, eine Klemmverbindung oder andere, dem Fachmann als sinnvoll erscheinende Verbindungsarten denkbar sind. Unter einer "Anlagefläche" soll insbesondere eine Fläche des Wischblattadapters verstanden werden, auf der das Trägerelement zumindest im Wesentlichen aufliegt und über die das Trägerelement fest mit dem Wischblattadapter verbunden werden kann. Unter einer "Verstimmung des Trägerelements" soll insbesondere eine Auslenkung des Trägerelements aus seiner Ruhelage verstanden werden, durch die eine voreingestellte Krümmung und dadurch eine voreingestellte Federkraft des Trägerelements verändert werden. Unter einer "Länge der Anlagefläche" soll insbesondere eine Ausdehnung der Anlagefläche parallel zu einer Haupterstreckungsrichtung des Wischblattadapters verstanden werden.

Weiter wird vorgeschlagen, dass die zumindest eine Anlagefläche eine Länge von maximal 15 mm und besonders bevorzugt eine Länge von maximal 7 mm aufweist. Dadurch kann das Trägerelement insbesondere mit einer vorteilhaft geringen Verstimmung an den Wischarmadapter angebracht werden.

Erfindungsgemäß wird vorgeschlagen, dass der zumindest eine Aufnahmebereich ein Plateau aufweist, das dazu vorgesehen ist, die zumindest eine Anlagefläche auszubilden. Dadurch kann der Aufnahmebereich insbesondere stabil ausgebildet werden, wobei die Länge der Anlagefläche vorteilhaft kurz bleiben kann. Unter einem "Plateau" soll insbesondere eine Fläche verstanden werden, die in einer Richtung, insbesondere zumindest im Wesentlichen senkrecht zur Anlagefläche, höher liegt als zumindest eine weitere Fläche des Aufnahmebereichs. Dabei bildet die höher gelegene Fläche des Plateaus vorteilhafterweise die Anlagefläche aus. Unter zumindest im Wesentlichen senkrecht zur Anlagefläche soll insbesondere verstanden werden, dass die Richtung, in der das Plateau höher liegt, sich um maximal 45 Grad, vorzugsweise um maximal 20 Grad und besonders vorteilhaft um weniger als 5 Grad von einer senkrecht zur Anlagefläche stehenden Flächennormalen unterscheidet.

Es wird weiter vorgeschlagen, dass der zumindest eine Aufnahmebereich einen Boden aufweist, der sich in seiner Höhe um zumindest 0,5 mm von einer Höhe der zumindest einen Anlagefläche unterscheidet. Dadurch kann das Plateau besonders einfach ausgebildet werden, und es kann ein vorteilhafter Freiraum innerhalb des Wischblattadapters für das Trägerelement geschaffen werden. Unter einem "Boden des Aufnahmebereichs" soll insbesondere ein sich von der Höhe in Bezug auf eine Unterkante des Wischblattadapters unterscheidender Teil des Aufnahmebereichs verstanden werden, der insbesondere tiefer liegt als das Plateau des Aufnahmebereichs. Dabei unterscheidet sich die Höhe vorteilhaft um 0,5 mm, vorteilhafterweise um 0,8 mm und in einer besonders vorteilhaften Ausgestaltung um 1 mm.

Weiterhin wird vorgeschlagen, dass der Boden des zumindest einen Aufnahmebereichs einen Abstand von einer Unterseite des Wischblattadapters aufweist, der kleiner ist als ein Abstand zwischen der zumindest einen Anlagefläche zu der Unterseite. Dadurch kann der Aufnahmebereich zur Anbindung des Trägerelements besonders vorteilhaft ausgebildet werden.

Ferner wird vorgeschlagen, dass der Boden des zumindest einen Aufnahmebereichs über eine Schrägfläche mit der zumindest einen Anlagefläche verbunden ist. Dadurch kann insbesondere der Aufnahmebereich insbesondere einfach ausgebildet werden. Unter einer "Schrägfläche" soll insbesondere eine Fläche verstanden werden, die in Bezug auf die Anlagefläche und/oder den Boden eine Neigung größer null Grad aufweist. Besonders bevorzugt weist die Schrägfläche eine Neigung auf, die in einem Bereich von 6 Grad bis 30 Grad liegt.

Weiter wird vorgeschlagen, dass die Länge der zumindest einen Anlagefläche zumindest im Wesentlichen ein Viertel einer Länge des zumindest einen Aufnahmebereichs beträgt. Dadurch kann ein besonders vorteilhaftes Verhältnis von Anlagefläche zu Aufnahmebereich erreicht werden. Unter "zumindest im Wesentlichen einem Viertel der Länge" soll insbesondere verstanden werden, dass die Länge der Anlagefläche maximal 20% vorzugsweise 15% und besonders vorteilhaft maximal 10% von exakt einem Viertel der Länge des Aufnahmebereichs abweicht.

Des Weiteren wird vorgeschlagen, dass die zumindest eine Anlagefläche eine Breite aufweist, die einer Breite des zumindest einen Aufnahmebereichs zumindest im Wesentlichen entspricht. Dadurch kann die Anlagefläche besonders einfach und vorteilhaft ausgebildet werden. Unter einem "der Breite zumindest im Wesentlichen entsprechen" soll insbesondere verstanden werden, dass die Breite der Anlagefläche um maximal 10%, vorteilhaft um maximal 5% und besonders vorteilhaft um 0% von der Breite des Aufnahmebereichs abweicht.

Erfindungsgemäß wird vorgeschlagen, dass die Wischblattadaptereinheit zumindest einen Energierichtungsweiser aufweist, der auf der Anlagefläche angeordnet ist. Dadurch kann insbesondere vorteilhaft Material bereitgestellt werden, das bei einem Schweißvorgang insbesondere vorteilhaft aufgeschmolzen werden kann. Unter einem "Energierichtungsweiser" soll insbesondere eine Erhebung verstanden werden. Vorzugsweise läuft die Erhebung spitz zu und ist während eines Schweißverfahrens dazu vorgesehen, zumindest teilweise aufgeschmolzen zu werden.

Es wird weiter vorgeschlagen, dass der zumindest eine Energierichtungsweiser dazu vorgesehen ist, während eines Schweißvorgangs zumindest teilweise aufgeschmolzen zu werden. Dadurch kann während eines Anschweißens des Trägerelements insbesondere vorteilhaft ein Toleranzausgleich erreicht werden. Unter "zumindest teilweise aufschmelzen" soll insbesondere verstanden werden, dass der Energierichtungsweiser bei einem Anschweißen des Trägerelements so weit aufgeschmolzen wird, dass die Federschiene einen definierten Abstand zu der Unterseite des Wischblattadapters aufweist. Mittels des Energierichtungsweisers können vorteilhaft Fertigungstoleranzen einfach ausgeglichen werden, und zwar insbesondere, indem der Energierichtungsweiser bei verschiedenen Wischblattadaptern einer gleichen Bauform verschieden weit aufgeschmolzen werden kann, um einen definierten Abstand zu der Unterseite zu erreichen. Dabei kann der Energierichtungsweiser vollständig oder beispielsweise nur zu 10 % aufgeschmolzen werden.

Weiterhin wird vorgeschlagen, dass der Wischblattadapter zumindest ein Sackloch aufweist, das oberhalb der zumindest einen Anlagefläche angeordnet ist. Dadurch kann das Trägerelement besonders vorteilhaft und einfach an den Wischblattadapter angeschweißt werden. Unter einem "Sackloch" soll insbesondere eine Ausnehmung verstanden werden, die durch einen Boden begrenzt ist. Unter einem "Sackloch" soll dabei insbesondere kein Durchgangsloch verstanden werden.

Ferner wird vorgeschlagen, dass das zumindest eine Sackloch als Langloch ausgebildet ist. Dadurch kann eine besonders einfache Positionierung eines Werkzeugs, insbesondere eines Schweißwerkzeugs, innerhalb des Sacklochs relativ zur Anlagefläche erreicht werden. Unter einem "Langloch" soll insbesondere eine längliche Ausnehmung verstanden werden, die eine Breite aufweist, die wesentlich kleiner ist als eine Länge der Ausnehmung. Vorzugsweise sind schmale Seiten der länglichen Ausnehmung durch Halbkreise abgeschlossen, deren Durchmesser einer Breite der Ausnehmung entsprechen. Längsseiten der länglichen Ausnehmung verlaufen dabei vorzugsweise parallel zueinander, wobei sie gerade sein oder einer Kurve, wie beispielsweise einem Kreisbogen, folgen können. Besonders bevorzugt weist das Langloch dabei eine Länge von 5 mm und eine Breite von 3 mm auf. Grundsätzlich sind natürlich auch andere, dem Fachmann als sinnvoll erscheinende Maße für die Länge und die Breite des Langlochs möglich.

Zudem wird vorgeschlagen, dass ein das zumindest eine Sackloch begrenzender Boden des Wischblattadapters dazu vorgesehen ist, während eines Schweißvorgangs aufgeschmolzen zu werden. Dadurch kann das Trägerelement besonders vorteilhaft mit dem Wischblattadapter verschweißt werden. Unter "während eines Schweißvorgangs aufgeschmolzen werden" soll insbesondere verstanden werden, dass der Boden des Sacklochs während des Schweißvorgangs so stark erhitzt wird, dass sich das Material des Bodens verflüssigt und dadurch auf den darunter liegenden Aufnahmebereich fließen kann und dort beim Auskühlen das Trägerelement mit dem Wischblattadapter verbindet.

Es wird weiter vorgeschlagen, dass die Wischblattadaptereinheit zumindest einen zweiten Aufnahmebereich umfasst, der ebenfalls zumindest eine Anlagefläche aufweist, die zur Anbringung eines weiteren Trägerelements vorgesehen ist. Dadurch kann der Wischblattadapter besonders vorteilhaft ausgebildet werden.

Zudem wird vorgeschlagen, dass die Wischblattadaptereinheit und das zumindest eine Trägerelement mittels einer Stoffschlussverbindung fest miteinander verbunden sind. Dadurch kann insbesondere das Trägerelement besonders vorteilhaft und einfach mit dem Wischblattadapter verbunden werden. Unter einer "Stoffschlussverbindung" soll insbesondere eine Verbindung zwischen zwei Bauteilen, insbesondere dem Trägerelement und dem Wischblattadapter, verstanden werden, die durch atomare oder molekulare Kräfte zwischen den beiden Verbindungspartnern entsteht.

Ferner wird vorgeschlagen, dass die Wischblattadaptereinheit und das zumindest eine Trägerelement mittels einer Schweißverbindung fest miteinander verbunden sind. Dadurch kann das Trägerelement besonders gut und langlebig mit dem Wischblattadapter verbunden werden. Unter einer "Schweißverbindung" soll insbesondere eine stoffschlüssige Verbindung verstanden werden, die mittels eines, dem Fachmann als sinnvoll erscheinenden Schweißverfahrens hergestellt ist. Unter einem "Schweißverfahren" soll insbesondere ein Verfahren verstanden werden, bei dem durch Aufschmelzen von Material der zu verbindenden Bauteile, nach einem Wiederabkühlen eine stoffschlüssige Verbindung erreicht wird. Dabei kann bei dem Schweißverfahren auch ein Schmelzzusatz hinzugefügt werden, um genügend Material zum Aufschmelzen bereitzustellen.

Des Weiteren wird vorgeschlagen, dass das zumindest eine Trägerelement mittels eines Ultraschallschweißens an die zumindest eine Anlagefläche der Wischblattadaptereinheit angebunden ist. Dadurch kann das zumindest eine Trägerelement besonders einfach und vorteilhaft auf den Wischblattadapter geschweißt werden. Unter einem "Ultraschallschweißen" soll insbesondere ein Schweißverfahren verstanden werden, bei dem die benötigte Wärme zum Schmelzen des Materials durch Einbringung einer hochfrequenten mechanischen Schwingung erreicht wird, durch die zwischen den zu verbindenden Bauteilen durch Molekular- und Grenzflächenreibung Wärmeenergie erzeugt wird.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer erfindungsgemäßen Wischblattadaptereinheit in einer schematischen Darstellung,
- Fig. 2: eine schematische Ansicht eines Wischblattadapters mit einer erfindungsgemäßen Wischblattadaptereinheit,
- Fig. 3: einen Längsschnitt durch einen erfindungsgemäßen Wischblattadapter mit einer erfindungsgemäßen Wischblattadaptereinheit und
- Fig. 4: einen Querschnitt durch einen erfindungsgemäßen Wischblattadapter mit einer erfindungsgemäßen Wischblattadaptereinheit.

### Beschreibung des Ausführungsbeispiels

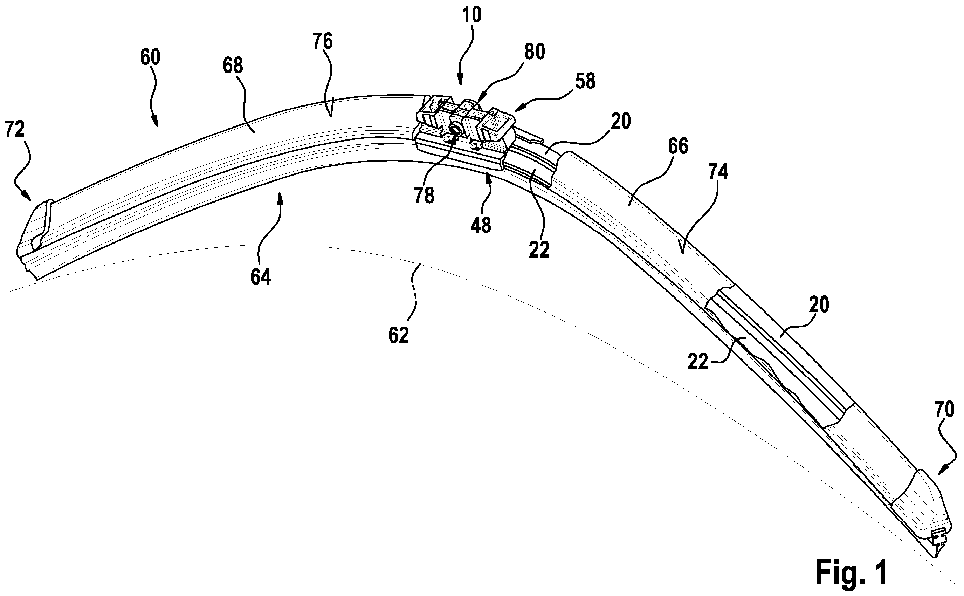

Die Figur 1 zeigt ein Wischblatt 60 mit einer erfindungsgemäßen Wischblattvorrichtung und einer erfindungsgemäßen Wischblattadaptereinheit. Das Wischblatt 60 ist Teil eines nicht näher dargestellten Wischsystems. Das Wischsystem ist dazu vorgesehen, in zumindest einem Betriebszustand eine nicht näher dargestellte Kraftfahrzeugscheibe zu wischen. Die Kraftfahrzeugscheibe weist dabei eine in Figur 1 angedeutete Krümmung 62 auf, die in unterschiedlichen Bereichen der Kraftfahrzeugscheibe unterschiedlich ausfallen kann. Das Wischblatt 60 ist zum Wischen der Kraftfahrzeugscheibe vorgesehen. Dazu ist das Wischblatt 60 über einen Wischblattadapter 10 mit einem nicht näher dargestellten Wischarm verbunden. Das Wischsystem umfasst einen nicht näher dargestellten Wischarmadapter, der fest mit dem Wischarm verbunden ist. Der Wischblattadapter 10 und der Wischarmadapter sind mechanisch und zerstörungsfrei trennbar miteinander verbunden. Der Wischblattadapter 10 und der Wischarmadapter sind dabei mittels eines Formschlusses miteinander verliersicher verbindbar. Grundsätzlich ist es auch denkbar, dass der Wischblattadapter 10 und der Wischarmadapter mittels eines Kraftschlusses oder einer Kombination aus einem Form- und Kraftschluss fest miteinander verbunden sind. Dabei sind jegliche, dem Fachmann als sinnvoll erscheinende Ausgestaltungen einer Verbindung zwischen dem Wischblattadapter 10 und dem Wischarmadapter denkbar. Der Wischarm ist mit einem Stellantrieb, wie insbesondere einem Elektromotor, gekoppelt. In einem Betriebszustand bewegt der Stellantrieb den Wischarm und mithin das Wischblatt 60 in einer kreisförmigen Bewegung über die Kraftfahrzeugscheibe. Es ist in diesem Zusammenhang jedoch auch denkbar, dass der Stellantrieb das Wischblatt 60 in einer linearen Bewegung oder auf einer beliebigen Kurvenbahn über die Kraftfahrzeugscheibe bewegt. Die Wischblattvorrichtung umfasst zumindest eine Wischleiste 64, die zum Wischen auf der Kraftfahrzeugscheibe aufliegt. Zur Verteilung und zum teilweisen Aufbau einer Auflagekraft auf die Wischleiste 64 umfasst die Wischblattvorrichtung zwei Trägerelemente 20, 22. Die Trägerelemente 20, 22 weisen jeweils eine Krümmung auf, die größer ist als die größte Krümmung der Kraftfahrzeugscheibe, wodurch gewährleistet ist, dass die Wischleiste in montiertem Zustand über ihre gesamte Länge auf der Kraftfahrzeugscheibe aufliegt. Die Trägerelemente 20, 22 sind außerdem dazu vorgesehen, die Wischleiste aufzunehmen und an dem Wischblatt 60 zu befestigen. Auf einer der Wischleiste abgewandten Seite der Trägerelemente 20,22 weist das Wischblatt 60 Spoilerelemente 66, 68 auf. Dabei ist jeweils ein Spoilerelement 66, 68 zwischen dem Wischblattadapter 10 und einem Ende 70, 72 in Längsrichtung des Wischblatts 60 angeordnet. Die Spoilerelemente 66, 68 erstrecken sich dabei über eine gesamte Strecke zwischen dem Wischblattadapter 10 und dem jeweiligen Ende 70, 72 des Wischblatts 60. Die Spoilerelemente 66, 68 weisen jeweils eine Windabweiserfläche 74, 76 auf, die in einem an einem Kraftfahrzeug montierten Zustand in Richtung einer Motorhaube zeigt. Die Windabweiserflächen sind dazu vorgesehen, das Wischblatt 60 aerodynamisch positiv zu beeinflussen. Während einer Fahrt wird durch einen über die Windabweiserflächen 74, 76 streifenden Fahrtwind eine Kraft auf das Wischblatt 60 in Richtung der Kraftfahrzeugscheibe aufgebaut. Dadurch wird die Wischleiste 64 während einer Fahrt auf die Kraftfahrzeugscheibe gedrückt und kann vorteilhaft nicht von dieser abheben.

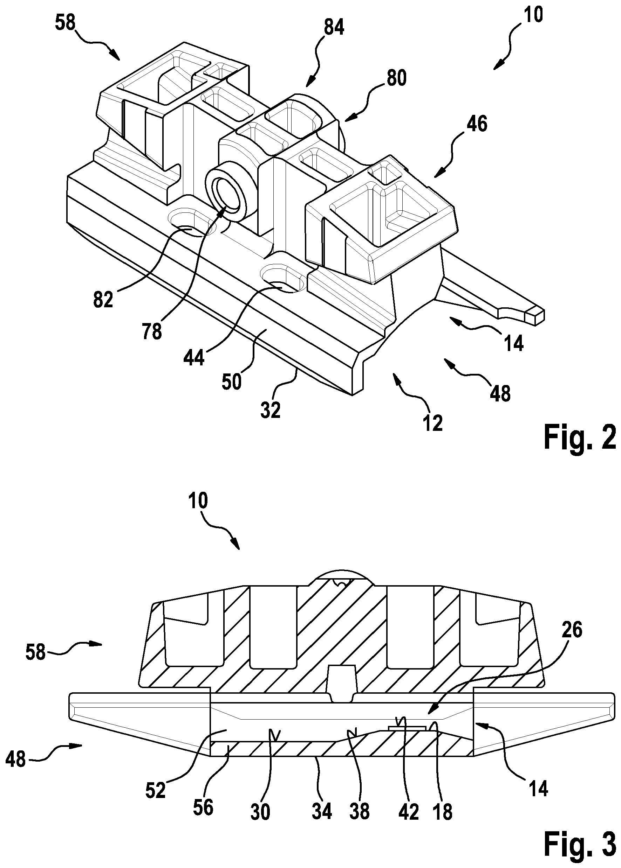

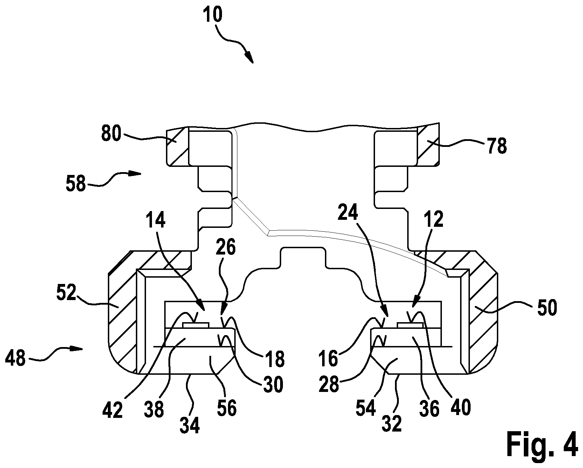

Die Figuren 2 bis 4 zeigen eine erfindungsgemäße Wischblattadaptereinheit mit dem Wischblattadapter 10, der zu einer Verbindung mit dem Wischarmadapter vorgesehen ist. Dazu weist der Wischblattadapter 10 in einem oberen Bereich eine Anbindungsstelle für den Wischarmadapter auf. Die Anbindungsstelle bildet in Längsrichtung mittig jeweils eine zu einer Seite des Wischblattadapters ausgerichtete kreisförmige Aufnahme 78, 80 aus, die dazu vorgesehen ist, den Wischarmadapter gelenkig zu lagern. Der Wischblattadapter 10 weist einen ersten Aufnahmebereich 12 und einen zweiten Aufnahmebereich 14 auf, die jeweils dazu vorgesehen sind, jeweils eines der Trägerelemente 20, 22 aufzunehmen. Die Aufnahmebereiche 12,14 sind in einem unteren Bereich 48 des Wischblattadapters 10, der einem montierten Zustand der Kraftfahrzeugscheibe zu- und einem Wischarmadapter abgewandt ist, angeordnet. In dem unteren Bereich 48 ist der Wischblattadapter 10 von zwei Seitenwänden 50, 52 gebildet, die parallel zu einer Haupterstreckungsrichtung des Wischblattadapters 10 verlaufen. Die Seitenwände 50, 52 begrenzen den Wischblattadapter 10 jeweils in Querrichtung. An einem der Kraftfahrzeugscheibe zu- und dem Wischarmadapter abgewandten Ende weisen die Seitenwände 50, 52 jeweils einen 90-Grad-Knick nach innen auf. Die Seitenwände 50, 52 verlaufen dabei jeweils nach innen aufeinander zu. Ein nach innen gerichteter Teil 54, 56 der Seitenwände 50, 52 weist dabei jeweils eine Länge von etwa 5 mm auf. Die nach innen gerichteten Teile 54, 56 der Seitenwände 50, 52 weisen einen Abstand voneinander auf, der größer ist als ihre Länge. Durch die nach innen gerichteten Teile 54, 56 bilden die Seitenwände 50, 52 jeweils eine um 90 Grad gekippte U-Form aus. In den um 90 Grad gekippten U-Formen, die von den Seitenwänden 50, 52 gebildet sind, ist jeweils einer der Aufnahmebereiche 12, 14 angeordnet. Eine der Kraftfahrzeugscheibe zu- und dem Wischarmadapter abgewandte Seite der nach innen gerichteten Teile 54, 56 der Seitenwände 50, 52 bildet jeweils eine Unterseite 32, 34 des Wischblattadapters 10 aus.

Jeder der Aufnahmebereiche 12, 14 weist jeweils eine Anlagefläche 16, 18 auf. Die Anlageflächen 16, 18 sind jeweils zur Befestigung des jeweiligen Trägerelements 20, 22 des Wischblatts 60 vorgesehen. Die Anlagefläche 16 ist zur Befestigung des Trägerelements 20 vorgesehen. Die Anlagefläche 18 ist zur Befestigung des Trägerelements 22 vorgesehen. Die Anlageflächen 16, 18 sind dazu vorgesehen, in einem Schweißverfahren stoffschlüssig mit dem entsprechenden Trägerelement 20, 22 verbunden zu werden. Die Anlageflächen 16, 18 sind jeweils auf einer der Kraftfahrzeugscheibe ab- und dem Wischblattadapter zugewandten Seite der nach innen gerichteten Teile 54, 56 der Seitenwände 50, 52 angeordnet. Die Anlageflächen 16, 18 weisen jeweils eine Länge auf, die annähernd ein Viertel einer Länge des Aufnahmebereichs 12, 14 beträgt. Die Länge der Anlageflächen 16, 18, die jeweils parallel zu der Haupterstreckungsrichtung des Wischblattadapters 10 verläuft, beträgt 7 mm. Grundsätzlich ist es auch möglich, dass die Anlageflächen 16, 18 jeweils eine Läge von maximal 15 mm oder maximal 20 mm aufweisen. Die Trägerelemente 20, 22 sind über die Länge der Anlageflächen 16, 18 fest mit dem Wischblattadapter 10 verbunden. Eine Breite der Anlageflächen 16, 18 entspricht jeweils einer Breite des jeweiligen Aufnahmebereichs 12, 14 zumindest im Wesentlichen. Die Breite entspricht dabei zumindest einer Breite des Trägerelements 20, 22, das auf der jeweiligen Anlagefläche 16, 18 befestigt wird, wodurch das Trägerelement 20, 22 über seine gesamte Breite auf der Anlagefläche 16, 18 aufliegt. Die Anlageflächen 16, 18 bilden dabei eine im Wesentlichen ebene Fläche aus. Die Anlageflächen 16, 18 verlaufen dabei jeweils parallel zu der entsprechenden Unterseite 32, 34. Grundsätzlich ist es aber auch denkbar, dass die Anlageflächen 16, 18 eine geneigte, gewölbte oder eine andere, dem Fachmann als sinnvoll erscheinende Fläche ausbilden.

Die Aufnahmebereiche 12, 14 weisen jeweils ein Plateau 24, 26 auf. Die Plateaus 24, 26 der Aufnahmebereiche 12, 14 sind jeweils dazu vorgesehen, die Anlagefläche 16, 18 des entsprechenden Aufnahmebereichs 12, 14 auszubilden. Die Plateaus 24, 26 sind jeweils als eine Erhöhung in dem entsprechenden Aufnahmebereich 12, 14 ausgebildet. Die Plateaus 24, 26 sind jeweils auf der der Kraftfahrzeugscheibe ab- und dem Wischarmadapter zugewandten Seite der nach innen gerichteten Teile 54, 56 der Seitenwände 50, 52 angeordnet. Die Plateaus 24, 26 erheben sich in Richtung eines oberen Bereichs 58 des Wischblattadapters 10. Die Plateaus 24, 26 sind jeweils an einem Ende des jeweiligen Aufnahmebereichs 12, 14 angeordnet. Grundsätzlich ist es aber auch denkbar, dass die Plateaus 24, 26 in einem anderen Teil des Aufnahmebereichs 12, 14, beispielsweise in einer Mitte des jeweiligen Aufnahmebereichs 12, 14, angeordnet sind.

Der Aufnahmebereiche 12, 14 weisen jeweils einen Boden 28, 30 auf, der sich in seiner Höhe um 0,9 mm von einer Höhe der Anlagefläche 16, 18 unterscheidet. Die Plateaus 24, 26 weisen dadurch eine Höhe von 0,9 mm auf. Die Böden 28, 30 der Aufnahmebereiche 12, 14 weisen dabei einen Abstand von der Unterseite 32, 34 auf, der kleiner ist als ein Abstand zwischen den jeweiligen Anlageflächen 16, 18 zu der Unterseite 32, 34.

Die Böden 28, 30 der Aufnahmebereiche 12, 14 sind jeweils über eine Schrägfläche 36, 38 mit der Anlagefläche 16, 18 verbunden. Die Böden 28, 30 gehen jeweils über die entsprechende Schrägfläche 36, 38, die jeweils eine konstante Steigung aufweist, in die Anlageflächen 16, 18 über. Grundsätzlich ist es auch denkbar, dass die Schrägflächen eine andere, dem Fachmann als sinnvoll erscheinende, beispielsweise eine gewölbte Form, aufweisen.

Die Wischblattadaptereinheit umfasst zwei Energierichtungsweiser 40, 42. Jeweils ein Energierichtungsweiser 40, 42 ist auf einer Anlagefläche 16, 18 der Aufnahmebereiche 12, 14 angeordnet. Der Energierichtungsweiser 40 ist auf der Anlagefläche 16 des Aufnahmebereichs 12 angeordnet. Der Energierichtungsweiser 42 ist auf der Anlagefläche 18 des Aufnahmebereichs 14 angeordnet. Die Energierichtungsweiser 40, 42 sind vor einem Schweißvorgang als spitz zulaufende Erhebungen ausgebildet. Die Energierichtungsweiser 40, 42 erheben sich in Richtung eines oberen Bereichs 58 des Wischblattadapters 10. Die Energierichtungsweiser 40, 42 sind dazu vorgesehen, während des Schweißvorgangs teilweise aufgeschmolzen zu werden. Aufgeschmolzenes Material der Energierichtungsweiser 40, 42 verbindet sich mit einem aufgeschmolzenen Ummantelungsmaterial der Trägerelemente 20, 22 und bildet dadurch nach Abkühlen eine stoffschlüssige Verbindung aus.

Der Wischblattadapter weist zwei Sacklöcher 44, 46 auf, die jeweils oberhalb einer der Anlageflächen 16, 18 angeordnet sind. Die Sacklöcher 44, 46 sind als Langlöcher ausgebildet. Die als Langlöcher ausgebildeten Sacklöcher 44, 46 sind in den oberen Bereich 58 des Wischblattadapters 10 eingebracht. Die Sacklöcher 44, 46 sind in einer dem Wischarmadapter in montiertem Zustand zugewandten Seite in den Wischblattadapter 10 eingebracht. Die Sacklöcher 44, 46 sind jeweils in einem Bereich in den Wischblattadapter 10 eingebracht, der unmittelbar oberhalb eines Endes des jeweiligen Aufnahmebereichs 12, 14 liegt, an der das entsprechende Plateau 24, 26 angeordnet ist, von dem die entsprechende Anlagefläche 16, 18 ausgebildet ist. Die Sacklöcher 44, 46 stehen jeweils in etwa in einer Flucht mit dem Energierichtungsweiser 40, 42, der auf der entsprechenden Anlagefläche 16, 18 angeordnet ist. Ein die Sacklöcher 40, 42 begrenzender Boden des Wischblattadapters 10 ist jeweils dazu vorgesehen, während des Schweißvorgangs aufgeschmolzen zu werden. Ein Material des Bodens des Wischblattadapters 10, welcher das jeweilige Sackloch 44, 46 begrenzt, verflüssigt bei dem Schweißvorgang und fließt auf das entsprechende Trägerelement 20, 22, das zum Verschweißen in dem entsprechende Aufnahmebereich 12, 14 angeordnet ist. Das aufgeschmolzene Material des Bodens des entsprechenden Sacklochs 44, 46 verbindet sich mit dem aufgeschmolzenen Ummantelungsmaterial der Trägerelemente 20, 22 und bildet dadurch nach Abkühlen eine stoffschlüssige Verbindung aus. Oberhalb jedes Aufnahmebereichs 12, 14 umfasst die Wischblattadaptereinheit jeweils ein weiteres, zusätzliches als Langloch ausgebildetes Sackloch 82, 84. Die zusätzlichen Sacklöcher 82, 84 sind oberhalb des Bodens 28, 30 des jeweiligen Aufnahmebereichs 12, 14 angeordnet. Die zusätzlichen Sacklöcher 82, 84 sind in Längsrichtung parallel zu den als Langlöcher ausgebildeten Sacklöchern 44, 46 verschoben.

Für eine Anbindung der Trägerelemente 20, 22 an dem Wischblattadapter 10 werden die Trägerelemente 20, 22 zunächst lose mit einem dafür vorgesehenen Bereich in den jeweiligen Aufnahmebereich 12, 14 eingelegt. Die Trägerelemente 20, 22 liegen jeweils auf dem entsprechenden Energierichtungsweiser 40, 42, der auf der entsprechenden Anlagefläche angeordnet ist, auf. Die Trägerelemente 20, 22 werden nun mittels eines Ultraschallschweißens an die entsprechende Anlagefläche der Aufnahmebereiche der Wischblattadaptereinheit angebunden. Dazu wird nach dem Einlegen der Trägerelemente 20, 22 jeweils eine Sonodrode von oben in die als Langloch ausgebildeten Sacklöcher 44, 46 eingeführt. Die Sonodrodeen bringen jeweils eine hochfrequente mechanische Schwingung in das Sackloch 44, 46 ein. Durch die dadurch entstehende Wärme schmilzt das Material des die Sacklöcher 40, 42 begrenzender Bodens des Wischblattadapters 10. Ist das Material des die Sacklöcher 40, 42 begrenzender Bodens des Wischblattadapters 10aufgeschmolzen, trifft die Sonodrode auf das darunter liegende Trägerelement 20, 22. Die Sonodroden induzieren die hochfrequente mechanische Schwingung nun in das entsprechende Trägerelement 20, 22, wodurch zwischen dem entsprechenden Energierichtungsweiser 40, 42 und dem Trägerelement 20, 22 durch Molekular- und Grenzflächenreibung eine Wärme entsteht, die das Material des entsprechenden Energierichtungsweisers 40, 42 und das Material der Ummantelung des entsprechenden Trägerelements 20, 22 aufschmilzt. Die Energierichtungsweiser 40, 42 werden dabei teilweise oder ganz aufgeschmolzen. Nach dem Aufschmelzen des Materials werden die Sonodroden entfernt und das Material härtet durch Abkühlung wieder aus. Die Trägerelemente 20, 22 sind nun jeweils auf einer den Unterseiten 32, 34 zugewandten und auf einer den Unterseiten 32, 34 abgewandten Seite stoffschlüssig mit dem Wischblattadapter 10 verbunden.

## Patentansprüche

1. Wischblattadaptereinheit mit einem Wischblattadapter (10), der zu einer Verbindung mit einem Wischarmadapter vorgesehen ist und zumindest einen Aufnahmebereich (12, 14) aufweist, der zumindest eine Anlagefläche (16, 18) aufweist, die zur Befestigung zumindest eines Trägerelements (20, 22) eines Wischblatts vorgesehen ist, wobei die Anlagefläche (16, 18) eine Fläche des Wischblattadapters (10) ist, auf der das Trägerelement (20, 22) aufliegt, wobei der Aufnahmebereich (12, 14) der Bereich ist, in dem das Trägerelement (20, 22) an dem Wischblattadapter (10) angebracht ist, wobei die zumindest eine Anlagefläche (16, 18) eine Länge von maximal 20 mm aufweist, wobei die Länge der Anlagefläche (16, 18) eine Ausdehnung der Anlagefläche (16, 18) parallel zu einer Haupterstreckungsrichtung des Wischblattadapters (10) ist, wobei der zumindest eine Aufnahmebereich (12, 14) ein Plateau (24, 26) aufweist, das dazu vorgesehen ist, die zumindest eine Anlagefläche (16, 18) auszubilden, wobei das Plateau (24, 26) eine Fläche ist, die in einer Richtung, insbesondere zumindest im Wesentlichen senkrecht zur Anlagefläche (16, 18), höher liegt als zumindest eine weitere Fläche des Aufnahmebereichs (12, 14) und wobei die zumindest eine Anlagefläche (16, 18) eine Breite aufweist, die einer Breite des zumindest einen Aufnahmebereichs (12, 14) zumindest im Wesentlichen entspricht, **gekennzeichnet durch** zumindest einen Energierichtungsweiser (40, 42), der auf der Anlagefläche (16, 18) angeordnet ist.

2. Wischblattadaptereinheit nach Anspruch 1, **dadurch gekennzeichnet, dass** die zumindest eine Anlagefläche (16, 18) eine Länge von maximal 15 mm aufweist.

3. Wischblattadaptereinheit nach Anspruch 1 oder 2, **dadurch gekennzeichnet, dass** die zumindest eine Anlagefläche (16, 18) eine Länge von maximal 7 mm aufweist.

4. Wischblattadaptereinheit nach einem der vorhergehenden Ansprüche, **dadurch gekennzeichnet, dass** der zumindest eine Aufnahmebereich (12, 14) einen Boden(28, 30) aufweist, der sich in seiner Höhe um zumindest 0,5 mm von einer Höhe der zumindest einen Anlagefläche (16, 18) unterscheidet.

5. Wischblattadaptereinheit nach Anspruch 4, **dadurch gekennzeichnet, dass** der Boden (28, 30) des zumindest einen Aufnahmebereichs (12, 14) einen Abstand von einer Unterseite (32, 34) des Wischblattadapters (10) aufweist, der kleiner ist als ein Abstand zwischen der zumindest einen Anlagefläche (16, 18) zu der Unterseite (32, 34).

6. Wischblattadaptereinheit zumindest nach Anspruch 4 oder 5, **dadurch gekennzeichnet, dass** der Boden (28, 30) des zumindest einen Aufnahmebereichs (12, 14) über eine Schrägfläche (36, 38) mit der zumindest einen Anlagefläche (16, 18) verbunden ist.

7. Wischblattadaptereinheit nach einem der vorhergehenden Ansprüche, **dadurch gekennzeichnet, dass** die Länge der zumindest einen Anlagefläche (16, 18) zumindest im Wesentlichen ein Viertel einer Länge des zumindest einen Aufnahmebereichs (12, 14) beträgt.

8. Wischblattadaptereinheit nach Anspruch 1, **dadurch gekennzeichnet, dass** der zumindest eine Energierichtungsweiser (40, 42) dazu vorgesehen ist, während eines Schweißvorgangs zumindest teilweise aufgeschmolzen zu werden.

9. Wischblattadaptereinheit nach einem der vorhergehenden Ansprüche, **dadurch gekennzeichnet, dass** der Wischblattadapter (10) zumindest ein Sackloch (44, 46) aufweist, das oberhalb der zumindest einen Anlagefläche (16, 18) angeordnet ist.

10. Wischblattadaptereinheit nach Anspruch 9, **dadurch gekennzeichnet, dass** das zumindest eine Sackloch (44, 46) als Langloch ausgebildet ist.

11. Wischblattadaptereinheit zumindest nach Anspruch 9 oder 10, **dadurch gekennzeichnet, dass** ein das zumindest eine Sackloch (44, 46) begrenzender Boden des Wischblattadapters (10) dazu vorgesehen ist, während eines Schweißvorgangs aufgeschmolzen zu werden.

12. Wischblattadaptereinheit nach einem der vorhergehenden Ansprüche, **gekennzeichnet durch** zumindest einen zweiten Aufnahmebereich (12, 14), der ebenfalls zumindest eine Anlagefläche (16, 18) aufweist, die zur Anbringung zumindest eines weiteren Trägerelements (20, 22) vorgesehen ist.

13. Wischblattvorrichtung mit einer Wischblattadaptereinheit nach einem der vorhergehenden Ansprüche und zumindest einem Trägerelement (20, 22).

14. Wischblattvorrichtung nach Anspruch 13, **dadurch gekennzeichnet, dass** die Wischblattadaptereinheit und das zumindest eine Trägerelement (20, 22) mittels einer Stoffschlussverbindung fest miteinander verbunden sind.

15. Wischblattvorrichtung nach Anspruch 14, **dadurch gekennzeichnet, dass** die Wischblattadaptereinheit und das zumindest eine Trägerelement (20, 22) mittels einer Schweißverbindung fest miteinander verbunden sind.

16. Wischblattvorrichtung nach Anspruch 15, **dadurch gekennzeichnet, dass** das zumindest eine Trägerelement (20, 22) mittels eines Ultraschallschweißens an die zumindest eine Anlagefläche (16, 18) der Wischblattadaptereinheit angebunden ist.

17. Wischblatt mit einer Wischblattvorrichtung nach einem der Ansprüche 13 bis 16.

18. Verfahren zur Herstellung einer Wischblattvorrichtung nach einem der Ansprüche 13 bis 16.

## Claims

1. Wiper blade adapter unit with a wiper blade adapter (10) which is provided for connecting to a wiper arm adapter and has at least one receiving region (12, 14) which has at least one contact surface (16, 18) which is provided for the fastening of at least one carrier element (20, 22) of a wiper blade, wherein the contact surface (16, 18) is a surface of the wiper blade adapter (10) on which the carrier element (20, 22) rests, wherein the receiving region (12, 14) is the region in which the carrier element (20, 22) is attached to the wiper blade adapter (10), wherein the at least one contact surface (16, 18) has a maximum length of 20 mm, wherein the length of the contact surface (16, 18) is an extent of the contact surface (16, 18) parallel to a main direction of extent of the wiper blade adapter (10), wherein the at least one receiving region (12, 14) has a plateau (24, 26) which is provided for forming the at least one contact surface (16, 18), wherein the plateau (24, 26) is a surface which is higher in one direction, in particular at least substantially perpendicular to the contact surface (16, 18), than at least one further surface of the receiving region (12, 14), and wherein the at least one contact surface (16, 18) has a width which at least substantially corresponds to a width of the at least one receiving region (12, 14), **characterized by** at least one energy-directing element (40, 42) which is arranged on the contact surface (16, 18).

2. Wiper blade adapter unit according to Claim 1, **characterized in that** the at least one contact surface (16, 18) has a maximum length of 15 mm.

3. Wiper blade adapter unit according to Claim 1 or 2, **characterized in that** the at least one contact surface (16, 18) has a maximum length of 7 mm.

4. Wiper blade adapter unit according to one of the preceding claims, **characterized in that** the at least one receiving region (12, 14) has a base (28, 30), the height of which differs by at least 0.5 mm from a height of the at least one contact surface (16, 18) .

5. Wiper blade adapter unit according to Claim 4, **characterized in that** the base (28, 30) of the at least one receiving region (12, 14) is at a distance from a lower side (32, 34) of the wiper blade adapter (10) that is smaller than a distance between the at least one contact surface (16, 18) and the lower side (32, 34).

6. Wiper blade adapter unit at least according to Claim 4 or 5, **characterized in that** the base (28, 30) of the at least one receiving region (12, 14) is connected to the at least one contact surface (16, 18) via an oblique surface (36, 38).

7. Wiper blade adapter unit according to one of the preceding claims, **characterized in that** the length of the at least one contact surface (16, 18) is at least substantially a quarter of a length of the at least one receiving region (12, 14).

8. Wiper blade adapter unit according to Claim 1, **characterized in that** the at least one energy-directing element (40, 42) is provided to be at least partially melted during a welding process.

9. Wiper blade adapter unit according to one of the preceding claims, **characterized in that** the wiper blade adapter (10) has at least one blind hole (44, 46) which is arranged above the at least one contact surface (16, 18).

10. Wiper blade adapter unit according to Claim 9, **characterized in that** the at least one blind hole (44, 46) is in the form of an elongated hole.

11. Wiper blade adapter unit at least according to Claim 9 or 10, **characterized in that** a base of the wiper blade adapter (10), the base delimiting the at least one blind hole (44, 46), is provided to be melted during a welding operation.

12. Wiper blade adapter unit according to one of the preceding claims, **characterized by** at least one second receiving region (12, 14) which likewise has at least one contact surface (16, 18) which is provided for attaching at least one further carrier element (20, 22).

13. Wiper blade device with a wiper blade adapter unit according to one of the preceding claims and with at least one carrier element (20, 22).

14. Wiper blade device according to Claim 13, **characterized in that** the wiper blade adapter unit and the at least one carrier element (20, 22) are fixedly connected to each other by means of an integrally bonded connection.

15. Wiper blade device according to Claim 14, **characterized in that** the wiper blade adapter unit and the at least one carrier element (20, 22) are fixedly connected to each other by means of a welded connection.

16. Wiper blade device according to Claim 15, **characterized in that** the at least one carrier element (20, 22) is joined to the at least one contact surface (16, 18) of the wiper blade adapter unit by means of ultrasonic welding.

17. Wiper blade with a wiper blade device according to one of Claims 13 to 16.

18. Method for producing a wiper blade device according to one of Claims 13 to 16.

## Revendications

1. Unité d'adaptateur d'essuie-glace avec un adaptateur d'essuie-glace (10), qui est prévu pour être relié à un adaptateur de bras d'essuie-glace et comprend au moins une zone de logement (12, 14), qui comprend au moins une surface d'appui (16, 18), qui est prévue pour la fixation d'au moins un élément de support (20, 22) d'un essuie-glace, la surface d'appui (16, 18) étant une surface de l'adaptateur d'essuie-glace (10) sur laquelle l'élément de support (20, 22) repose, la zone de logement (12, 14) étant la zone dans laquelle l'élément de support (20, 22) est disposé sur l'adaptateur d'essuie-glace (10), ladite au moins une surface d'appui (16, 18) présentant une longueur d'au plus 20 mm, la longueur de la surface d'appui (16, 18) étant une étendue de la surface d'appui (16, 18) parallèlement à une direction d'extension principale de l'adaptateur d'essuie-glace (10), ladite au moins une zone de logement (12, 14) comprenant un plateau (24, 26), qui est prévu pour former ladite au moins une surface d'appui (16, 18), le plateau (24, 26) étant une surface qui, dans une direction, notamment au moins essentiellement perpendiculairement à la surface d'appui (16, 18), est située plus haut qu'au moins une autre surface de la zone de logement (12, 14) et ladite au moins une surface d'appui (16, 18) présentant une largeur qui correspond au moins essentiellement à une largeur de ladite au moins une zone de logement (12, 14), **caractérisé par** au moins un vecteur d'énergie (40, 42) qui est agencé sur la surface d'appui (16, 18).

2. Unité d'adaptateur d'essuie-glace selon la revendication 1, **caractérisée en ce que** ladite au moins une surface d'appui (16, 18) présente une longueur d'au plus 15 mm.

3. Unité d'adaptateur d'essuie-glace selon la revendication 1 ou 2, **caractérisée en ce que** ladite au moins une surface d'appui (16, 18) présente une longueur d'au plus 7 mm.

4. Unité d'adaptateur d'essuie-glace selon l'une quelconque des revendications précédentes, **caractérisée en ce que** ladite au moins une zone de logement (12, 14) comprend un fond (28, 30), dont la hauteur diffère d'au moins 0,5 mm d'une hauteur de ladite au moins une surface d'appui (16, 18).

5. Unité d'adaptateur d'essuie-glace selon la revendication 4, **caractérisée en ce que** le fond (28, 30) de ladite au moins une zone de logement (12, 14) présente un écart par rapport à un côté inférieur (32, 34) de l'adaptateur d'essuie-glace (10) qui est inférieur à un écart entre ladite au moins une surface d'appui (16, 18) et le côté inférieur (32, 34).

6. Unité d'adaptateur d'essuie-glace au moins selon la revendication 4 ou 5, **caractérisée en ce que** le fond (28, 30) de ladite au moins une zone de logement (12, 14) est relié par l'intermédiaire d'une surface inclinée (36, 38) avec ladite au moins une surface d'appui (16, 18).

7. Unité d'adaptateur d'essuie-glace selon l'une quelconque des revendications précédentes, **caractérisée en ce que** la longueur de ladite au moins une surface d'appui (16, 18) est d'au moins essentiellement un quart d'une longueur de ladite au moins une zone de logement (12, 14).

8. Unité d'adaptateur d'essuie-glace selon la revendication 1, **caractérisée en ce que** ledit au moins un vecteur d'énergie (40, 42) est prévu pour être au moins partiellement fondu pendant un processus de soudage.

9. Unité d'adaptateur d'essuie-glace selon l'une quelconque des revendications précédentes, **caractérisée en ce que** l'adaptateur d'essuie-glace (10) comprend au moins un trou borgne (44, 46), qui est agencé au-dessus de ladite au moins une surface d'appui (16, 18).

10. Unité d'adaptateur d'essuie-glace selon la revendication 9, **caractérisée en ce que** ledit au moins un trou borgne (44, 46) est configuré sous la forme d'un trou longitudinal.

11. Unité d'adaptateur d'essuie-glace au moins selon la revendication 9 ou 10, **caractérisée en ce qu'**un fond de l'adaptateur d'essuie-glace (10) délimitant ledit au moins un trou borgne (44, 46) est prévu pour être fondu pendant un processus de soudage.

12. Unité d'adaptateur d'essuie-glace selon l'une quelconque des revendications précédentes, **caractérisée par** au moins une deuxième zone de logement (12, 14), qui comprend également au moins une surface d'appui (16, 18), qui est prévue pour la disposition d'au moins un autre élément de support (20, 22).

13. Dispositif d'essuie-glace avec une unité d'adaptateur d'essuie-glace selon l'une quelconque des revendications précédentes et au moins un élément de support (20, 22).

14. Dispositif d'essuie-glace selon la revendication 13, **caractérisé en ce que** l'unité d'adaptateur d'essuie-glace et ledit au moins un élément de support (20, 22) sont reliés solidement l'un avec l'autre au moyen d'une liaison par accouplement de matière.

15. Dispositif d'essuie-glace selon la revendication 14, **caractérisé en ce que** l'unité d'adaptateur d'essuie-glace et ledit au moins un élément de support (20, 22) sont reliés solidement l'un avec l'autre au moyen d'une liaison par soudage.

16. Dispositif d'essuie-glace selon la revendication 15, **caractérisé en ce que** ledit au moins un élément de support (20, 22) est relié à ladite au moins une surface d'appui (16, 18) de l'unité d'adaptateur d'essuie-glace au moyen d'un soudage par ultrasons.

17. Essuie-glace avec un dispositif d'essuie-glace selon l'une quelconque des revendications 13 à 16.

18. Procédé de fabrication d'un dispositif d'essuie-glace selon l'une quelconque des revendications 13 à 16.
